# EUROPÄISCHE PATENTSCHRIFT

(11) **EP 3 507 480 B1**
(45) Veröffentlichungstag und Bekanntmachung des Hinweises auf die Patenterteilung: **29.05.2024**
(21) Anmeldenummer: 17764339.2
(22) Anmeldetag: 24.08.2017
(51) Int. Cl.: F02M 27/08, F02M 25/06, F02M 35/10, F02M 35/08, B06B 1/00

(54) **MEDIUMLEITUNG EINER BRENNKRAFTMASCHINE**
MEDIUM LINE OF AN INTERNAL COMBUSTION ENGINE
CONDUITE DE FLUIDE POUR MOTEUR À COMBUSTION INTERNE

(30) Priorität: 30.08.2016 DE 102016116147
(43) Veröffentlichungstag der Anmeldung: 10.07.2019
(73) Patentinhaber: Volkswagen AG, 38440 Wolfsburg (DE)
(72) Erfinder: SPÄH, Christian, 38302 Wolfenbüttel (DE); KRETSCHMANN, Gerd, 39345 Flechtingen (DE); BENITEZ-LUNA, Jose-Calasan, 38547 Calberlah (DE); HOFMANN, Reiner, 38102 Braunschweig (DE)
(74) Vertreter: Freischem & Partner Patentanwälte mbB
(86) Internationale Anmeldenummer: PCT/EP2017/071282
(87) Internationale Veröffentlichungsnummer: WO 2018/041699

(56) Entgegenhaltungen:
- WO-A1-2017/001272
- DE-A1-102004 062 977
- DE-A1-102008 043 768
- JP-A- H10 306 751
- JP-A- S57 195 848
- US-A- 3 186 392

## Beschreibung

Die Erfindung betrifft eine Mediumleitung einer Brennkraftmaschine gemäß dem Oberbegriff des Anspruchs 1, insbesondere für Blow-by-Gase und/oder Ansaugluft von Brennkraftmaschinen. Dabei kann es sich insbesondere um Brennkraftmaschinen handeln, die in Kraftfahrzeugen eingesetzt werden bzw. um Kraftfahrzeuge mit solchen Brennkraftmaschinen.

Bei niedrigen Außentemperaturen kann es zu Eisbildung innerhalb von Mediumleitungen einer Brennkraftmaschine kommen. Dies betrifft insbesondere Mediumleitungen für Blow-by-Gase oder Frischluft im Ansaugtrakt einer Brennkraftmaschine. Wenn sich größere Eiselemente an den Umfangswänden der Mediumleitung bilden, welche sich im Betrieb der Brennkraftmaschine durch Erwärmung lösen und von dem durch die Mediumleitung geführten Medium mitbewegt werden, können solche Eiselemente die Brennkraftmaschine schädigen, insbesondere ein Verdichterrad eines Turboladers, das stromabwärts der Mediumleitung angeordnet ist.

Aus DE 10 2008 043 768 A1 ist eine Mediumleitung zum Durchleiten eines Mediums bekannt, innerhalb welcher ein Vibrationselement angeordnet ist. Dabei handelt es sich um ein passives Vibrationselement, das mittels der Strömung des Mediums angetrieben ist und die Mediumleitung - ohne Zuführung von externer Energie - vor einem Vereisen schützen soll. Als Vibrationselemente werden flexible Ringmembranen und Flimmerhärchen vorgeschlagen, die durch die Mediumströmung in Vibration versetzt werden sollen. Die Mediumleitung ist für eine Kurbelgehäuseentlüftungsleitung vorgesehen. Nachteilig ist, dass die beschriebenen Vibrationselemente aufwändig herzustellen sind, in Mediumleitungen mit komplexen Geometrien nicht oder nur sehr zeitaufwendig montierbar sind und die Funktionsfähigkeit ausschließlich von der Strömung des Mediums abhängig ist.

Aus DE 10 2004 062 977 A1 ist eine Kombination aus einem Körper und einem Generator zur Erzeugung eines elektromagnetischen Wechselfelds bekannt. Der Körper dieser Kombination weist zumindest eine durch Beaufschlagung mit dem Wechselfeld des Generators erwärmende Heizzone aus einem mit Ferritadditiven versehenen Kunststoff auf.

Der Erfindung liegt die Aufgabe zugrunde, eine Mediumleitung einer Brennkraftmaschine gemäß dem Oberbegriff des Anspruchs 1 zur Verfügung zu stellen, welche kostengünstig herstellbar sowie einfach montierbar ist und zuverlässig die Ansammlung von Eis reduziert oder vollständig verhindert.

Die Lösung der Aufgabe erfolgt erfindungsgemäß mit den Merkmalen des unabhängigen Anspruchs. Weitere praktische Ausführungsformen und Vorteile der Erfindung sind in Verbindung mit den abhängigen Ansprüchen beschrieben.

Eine erfindungsgemäße Mediumleitung einer Brennkraftmaschine umfasst einen Grundkörper und mindestens einen, von einer Umfangswand des Grundkörpers begrenzten Strömungsbereich sowie eine Blow-by-Gas-Einleitstelle. Der Strömungsbereich ist zur Durchströmung von einem Medium vorgesehen, insbesondere zum Durchleiten eines Mediums, wie z.B. zum Durchleiten von Blow-by-Gasen und/oder von Frischluft. An dem Grundkörper ist außerhalb des Strömungsbereiches im Bereich der Blow-by-Gas-Einleitstelle mindestens ein Mittel zur Schwingungsanregung des Grundkörpers angeordnet, das ein mechanisches Lösen von kleineren Eiselementen ermöglicht. Das mindestens eine Mittel zur Schwingungsanregung ist in Strömungsrichtung betrachtet im Bereich der Blow-by-Gas-Einleitstelle außenseitig einer Ansaughutze und auf einer der Blow-by-Gas-Einleitstelle gegenüberliegenden Seite an der Außenseite des Grundkörpers der Mediumleitung angeordnet.

Unter Mittel zur Schwingungsanregung sind jegliche Mittel zur Schwingungsanregung gemeint, die geeignet sind, den Grundkörper von der Außenseite aus in Schwingung zu versetzen. Derartige Mittel können auch als Shaker bezeichnet werden. Die außenseitige Einleitung der Anregung des Grundkörpers hat den Vorteil, dass der Bildung von Eisschichten effizient entgegengewirkt werden kann bzw. die Bildung dickerer Eisschichten dadurch vermieden wird, dass kleinste Eispartikel, die sich an der inneren Umfangswand bilden, durch die Schwingungen abgelöst und - für die Brennkraftmaschine unschädlich - von der Strömung des Mediums mitgerissen und abgeführt werden. Es wird damit sicher verhindert, dass sich dickere Eisschichten oder größere Eiselemente an der inneren Umfangswand des Grundkörpers im Strömungsbereich bilden, deren Ablösen technische Probleme verursachen könnte, insbesondere wenn diese in einen stromabwärts der Mediumleitung angeordneten Verdichter eines Turboladers eindringen. Vorteilhaft ist weiterhin, dass verschiedene Mittel zur Schwingungsanregung mit nur niedrigem Energiebedarf zur Verfügung stehen, insbesondere wenn der Energiebedarf verglichen wird mit Konzepten, die mit einer Beheizung einer Mediumleitung verbunden sind, beispielsweise Blow-by-Heizungen.

Die Anordnung des mindestens einen Mittels zur Schwingungsanregung außenseitig an dem Grundkörper hat den weiteren Vorteil, dass die Fixierung und die Montage mit einfachen und kostengünstigen Konzepten umgesetzt werden können. Die Realisierung einer erfindungsgemäßen Mediumleitung ist somit unabhängig von der inneren geometrischen Komplexität der Mediumleitung möglich, d.h. insbesondere unabhängig von der Geometrie und Komplexität der Mediumleitung im Bereich der inneren Umfangswand. Erfindungsgemäße Mediumleitungen lassen sich insoweit auch ohne großen Aufwand durch Nachrüstung vorhandener Mediumleitungen erzielen, wenn entsprechender Bauraum verfügbar ist.

Dadurch, dass das mindestens eine Mittel zur Schwingungsanregung in Strömungsrichtung betrachtet im Bereich der Blow-by-Gas-Einleitstelle außenseitig einer Ansaughutze und auf einer der Blow-by-Gas-Einleitstelle gegenüberliegenden Seite an der Außenseite des Grundkörpers der Mediumleitung angeordnet ist, vorzugsweise auf der gegenüberliegenden Seite und - in Hauptströmungsrichtung betrachtet - auf der Höhe der Blow-by-Gas-Einleitstelle und/oder geringfügig stromabwärts der Blow-by-Gas-Einleitstelle, wird der Bildung von Eis besonders effizient entgegengewirkt. Im Bereich von Blow-by-Gas-Einleitstellen ist die Gefahr von Eisbildung besonders hoch, da in dem Blow-by-Gas Wassertröpfchen enthalten sein können, welche an der inneren Umfangswand der Mediumleitung kondensieren und gefrieren können, insbesondere wenn diese bei niedrigen Umgebungstemperaturen um den Gefrierpunkt oder kälter entsprechend niedrige Temperaturen aufweisen. Da Blow-by-Gas-Leitungen häufig derart angeordnet sind, dass das Blow-by-Gas von oben in Richtung der Schwerkraft nach unten in eine Ansaugleitung eingeleitet wird, werden derartige Wassertröpfchen schwerkraftbedingt auf die der Blow-by-Gas-Einleitstelle der Blow-by-Gas-Leitung gegenüberliegende Seite der inneren Umfangswand gefördert, so dass dort die Gefahr einer Eisbildung bzw. der Bildung größerer Eiselemente am größten ist.

Eine erfindungsgemäße Mediumleitung ist vorzugsweise Teil eines Ansaugtraktes einer Brennkraftmaschine. Insbesondere ist der Grundkörper Teil einer Ansaugleitung einer Brennkraftmaschine. Beispielsweise kann eine Mediumleitung, die Teil einer Ansaugleitung ist, eine sogenannte Ansaughutze sein. Darunter wird insbesondere ein Zwischenelement einer Ansaugleitung einer Brennkraftmaschine verstanden, welches in einer Hauptströmungsrichtung von Ansaugluft durchströmt wird und in welchem ferner mindestens eine Öffnung für eine radial einmündende Blow-by-Gas-Leitung ausgebildet ist. Zusätzlich zu der Öffnung kann auch ein Anschluss-Stutzen für eine Steckverbindung zu einer Blow-by-Gas-Leitung an der Ansaughutze ausgebildet sein. In Ansaugleitungen von Brennkraftmaschinen, insbesondere in Ansaughutzen, ist die Verhinderung von Eisbildung und/oder ein frühzeitiges mechanisches Lösen von kleineren Eiselementen von besonderem Vorteil, zum einen weil in diesen Bereichen die Gefahr einer Eisbildung erfahrungsgemäß besonders hoch ist und zum anderen, weil Mediumleitungen in solchen Bereichen einer Brennkraftmaschine mit teilweise besonders hohen Strömungsgeschwindigkeiten von Ansaugluft durchströmt werden. Dadurch wirken - bedingt durch hohe Strömungsgeschwindigkeiten - große Strömungskräfte auf etwaige Eiselemente ein, so dass die Gefahr eines Lösens und einer besonders hohen Beschleunigung auch größerer Eiselemente besonders groß ist. Durch die Mediumleitung beschleunigte Eiselemente können insbesondere zu einer mechanischen Beschädigung nachgelagerter Bauteile führen, insbesondere zur Beschädigung von Verdichterrädern von Turboladern in Brennkraftmaschinen.

In einer weiteren praktischen Ausführungsform ist das mindestens eine Mittel zur Schwingungsanregung derart angeordnet und ausgebildet, dass von außen auf die Umfangswand gerichtete, zumindest teilweise radial nach innen wirkende Schwingungen in den Grundkörper einleitbar sind. Derartige, radial nach innen wirkende Schwingungen haben den Vorteil, dass mit solchen Schwingungen bei den meisten Mediumleitungen in Brennkraftmaschinen die größte Schwingungswirkung erzielt wird. Dies gilt insbesondere, wenn die Mediumleitung radial wirkende Schwingungen weniger absorbiert als in anderen Richtungen wirkende Schwingungen, insbesondere als in Längsrichtung (axialer Richtung) bzw. in Hauptströmungsrichtung der Mediumleitung wirkende Schwingungen. Dies ist umso mehr der Fall, je weiter die nächstkommende Anbindungsstruktur des Grundkörpers in Hauptströmungsrichtung beabstandet zu dem Kontaktbereich zwischen dem mindestens einen Mittel zur Schwingungserzeugung angeordnet ist.

In einer weiteren praktischen Ausführungsform der erfindungsgemäßen Mediumleitung ist das mindestens eine Mittel zur Schwingungsanregung funktional mit einer externen Energieversorgung verbunden, insbesondere einer elektrischen Energieversorgung. Dies hat den Vorteil, dass die Mittel unabhängig von der Strömung des Mediums durch die Mediumleitung - und, falls gewünscht, auch unabhängig von der Brennkraftmaschine - betreibbar sind. Das heißt, die Amplitude und Frequenz der Schwingung können bedarfsweise eingestellt und vorgegeben werden. Ferner ist es möglich, auch bei einem variierenden Massenstrom durch die Mediumleitung das mindestens eine Mittel zur Schwingungsanregung mit konstanten Parametern zu betreiben. Besonders vorteilhaft ist, dass verschiedene geeignete Mittel zur Schwindungsanregung einen geringen Energiebedarf haben bzw. eine nur geringe elektrische Leistung für den Betrieb der Mittel erforderlich ist. Insbesondere lassen sich mit einer Leistungsaufnahme von weniger als 50 W, selbst weniger als 30 W und insbesondere nur mit maximal 15 W oder mit maximal 10 W bereits sehr effiziente und die Aufgabe der Erfindung lösende Medienleitungen realisieren.

Als konstruktiv einfache und kostengünstig verfügbare Mittel zur Schwingungsanregung sind insbesondere piezoelektrische Elemente und/oder elektromechanische Elemente geeignet.

Mit Hilfe eines piezoelektrischen Elements, welches mittels eines Generators zur Erzeugung von Sinusschwingungen angetrieben wird, können insbesondere Schwingungen mit hohen Frequenzen erzeugt werden, insbesondere auch Schwingungen im Ultraschallbereich.

Als einfachere und kostengünstigere Variante können beispielsweise elektromechanische Elemente eingesetzt werden, insbesondere ein Elektromotor mit einer Unwucht. Mit einem derartigen elektromechanischen Element können insbesondere Schwingungen mit Frequenzen bis zu 500 Hz einfach und kostengünstig erzeugt werden, insbesondere Schwingungen mit Frequenzen im Bereich zwischen 10 Hz und 1000 Hz.

Zur wirksamen Reduzierung bzw. Vermeidung einer Eisbildung bzw. Eisansammlung in einer erfindungsgemäßen Mediumleitung werden mit dem Mittel zur Schwingungsanregung vorzugsweise Schwingungen mit einer Frequenz von mindestens 50 Hz, bevorzugt mindestens 100 Hz, mindestens 200 Hz, mindestens 250 Hz oder mindestens 300 Hz und besonders bevorzugt mindestens 400 Hz erzeugt. Abweichend zu Vorstehendem können auch schon Frequenzen ab 1 Hz zur Lösung der Aufgabe mit dem Mittel zur Schwingungsanregung erzeugt werden. Weiter bevorzugt sind Frequenzen zwischen 400 Hz und 500 Hz bzw. zwischen 450 Hz und 500 Hz. Derartige Frequenzen werden aufgrund der geringeren Kosten vorzugsweise mit einem wie vorstehend beschriebenen elektromechanischen Element erzeugt. Schon mit derartigen Frequenzen können mit Hilfe der eingebrachten Schwingung des Grundkörpers Eiselemente, insbesondere dünne Eisschichten und/oder kleinere Eispartikel, von der inneren Umfangswand des Grundkörpers abgelöst bzw. deren Entstehung verhindert werden.

Mit einem piezoelektrischen Element als Mittel zur Schwingungsanregung werden vorzugsweise Schwingungen im Bereich ab 16 kHz erzeugt, insbesondere im Bereich zwischen 16 kHz und 100 kHz, vorzugsweise zwischen 16 kHz und 30 kHz.

Eine weitere Reduzierung einer Eisbildung oder Vermeidung der Bildung von größeren Eiselementen kann erzielt werden, wenn das Mittel zur Schwingungsanregung zur Erzeugung von Schwingungen ausgelegt ist, deren Frequenz um maximal 10 % von der Eigenfrequenz oder mindestens eines ganzzahligen Vielfachen der Eigenfrequenz des Grundkörpers abweicht. Bevorzugt beträgt die Abweichung maximal 5 %, weiter bevorzugt maximal 2 % und besonders bevorzugt maximal 1 %. Idealerweise erfolgt die Schwingungsanregung - mit einer Toleranz von weniger als 1 %, beispielsweise 0,5 % - in der Eigenfrequenz des Grundkörpers bzw. der Mediumleitung im eingebauten Zustand in einer Brennkraftmaschine. In diesem Fall wird ein möglichst großer Teil der von dem mindestens einen Mittel zur Schwingungsanregung bereitgestellten Energie in eine erwünschte Schwingung des Grundkörpers bzw. der Mediumleitung umgewandelt und somit zur Lösung der Aufgabe genutzt. In diesem Fall ergibt sich auch ein größtmöglicher wirksamer Schwingungsbereich am Grundkörper, d.h. die innere Umfangsfläche des Grundkörpers, welche derart in Schwingung versetzt wird, dass einer Eisbildung wirksam entgegengewirkt bzw. die Entstehung größerer Eiselemente wirksam verhindert, ist besonders groß.

Vorzugsweise erstreckt sich das mindestens eine Mittel zur Schwingungsanregung über mindestens 5 % des Außenumfangs des Grundkörpers, weiter bevorzugt über mindestens 10 % und besonders bevorzugt über mindestens 20 %. Dabei kann sich entweder nur ein Mittel zur Schwingungsanregung über die entsprechenden Bereiche des Außenumfangs erstrecken. Alternativ oder in Ergänzung können auch mehrere Mittel zur Schwingungsanregung entlang des Außenumfangs des Grundkörpers angeordnet sein. Eine Eisbildung bzw. einer Entstehung größerer Eiselemente wird insbesondere in den Bereichen der inneren Umfangswand verhindert, in welchen die korrespondierende äußere Umfangswand unmittelbaren Kontakt zu einem Mittel zur Schwingungsanregung aufweist.

Durch die Anordnung mehrerer Mittel zur Schwingungsanregung kann - auch bei Mediumleitungen mit rundem Querschnitt, insbesondere kreisförmigem Querschnitt - eine überwiegend in radialer Richtung wirkende Schwingungsanregung über einen größeren Umfangsbereich erzielt werden. Wenn beispielsweise eine Schwingungsanregung über einen Umfangsbereich von 180° bzw. 50 % des Umfangs erzielt werden soll, ist es sinnvoll, mindestens drei nur punktuell, d.h. insbesondere in Bereichen von weniger als 10 % oder weniger als 5 % des Außenumfangs, wirkende Mittel zur Schwingungsanregung gleichmäßig über 180° des Umfangs verteilt anzuordnen. So kann sichergestellt werden, dass in den Bereichen zwischen zwei benachbarten Anregungspunkten der entsprechenden Mittel zur Schwingungsanregungen die Schwingungen zumindest überwiegend jeweils in radialer Richtung des Grundkörpers wirken.

Alternativ oder in Ergänzung dazu kann es vorteilhaft sein, mehrere Mittel zur Schwingungsanregung - in axialer Hauptströmungsrichtung des Mediums betrachtet - axial beabstandet zueinander anzuordnen, so dass sich die auf den Grundkörper übertragenen Schwingungen insgesamt über mehrere Längenabschnitte bzw. über einen größeren Längenabschnitt erstrecken. Vorzugsweise werden die Mittel dabei so angeordnet, dass sich die einzelnen Schwingungsanregungen ergänzen bzw. verstärken.

In einer weiteren praktischen Ausführungsform ist an dem Grundkörper eine Befestigungsstruktur vorgesehen, um das Mittel zur Schwingungsanregung an dem Grundkörper zu fixieren. Als Befestigungsstruktur können insbesondere ein oder mehrere Schraubdome bzw. sonstige Materialverstärkungen vorgesehen sein, die ein Verschrauben, Verschweißen, Verkleben oder eine sonstige geeignete Befestigung des mindestens einen Mittels zur Schwingungsanregung erleichtern und/oder überhaupt erst ermöglichen. Im Fall von im Blasformverfahren hergestellten rohrartigen Mediumleitungen, insbesondere in Form von Ansaughutzen, kann eine derartige Befestigungsstruktur insbesondere nachträglich an dem Grundkörper montiert werden. Es ist ebenfalls möglich, derartige Befestigungsstrukturen einstückig an einem Grundkörper auszubilden, insbesondere wenn die Mediumleitung im Kunststoffspritzgießverfahren hergestellt wird.

Alternativ oder in Ergänzung dazu kann das mindestens eine Mittel zur Schwingungsanregung über eine den Grundkörper zumindest teilweise umschließende Schelle und/oder ein den Grundkörper zumindest teilweise umschließendes Band am Grundkörper befestigt sein. Besonders bevorzugt ist es dabei, wenn die Schelle und/oder das Band den Grundkörper vollständig umschließend angeordnet ist. Die Schwingungen werden dann von dem Mittel zur Schwingungsanregung über die Schelle bzw. das Band auf den Grundkörper übertragen, und das Mittel wird sicher an dem Grundkörper gehalten.

Es ist weiter vorteilhaft, wenn die Schelle und/oder das Band über eine Verkrallung, Verzahnung oder aufgrund einer sonstigen reibschlüssigen oder formschlüssigen Struktur eine Verbindung zwischen dem Mittel zur Schwingungsanregung und/oder dem Grundkörper derart herstellt, dass Relativbewegungen zwischen dem Mittel zur Schwingungsanregung und dem Grundkörper entgegengewirkt wird. In diesem Fall werden die vom dem Mittel zur Schwingungsanregung erzeugten Schwingungen besonders effizient auf den Grundkörper übertragen.

In einer weiteren praktischen Ausführungsform ist das mindestens eine Mittel zur Schwingungsanregung funktional mit einer Steuerung zur bedarfsweisen Aktvierung des mindestens einen Mittels zur Schwingungsanregung gekoppelt. Dabei erfolgt die Steuerung vorzugsweise temperaturabhängig, insbesondere derart, dass bei Unterschreitung einer vorgegebenen Außentemperatur, beispielsweise von 5 °C, 3 °C oder 0 °C, das Mittel zur Schwingungsanregung aktiviert wird.

Die Steuerung kann - alternativ oder in Ergänzung dazu - auch dazu genutzt werden, das Mittel zur Schwingungsanregung nur dann zu aktivieren, wenn die Brennkraftmaschine in Betrieb ist und/oder wenn ein Steuerbefehl für den Start der Brennkraftmaschine gegeben wurde.

Weitere praktische Ausführungsformen der Erfindung sind nachfolgend im Zusammenhang mit den Zeichnungen beschrieben. Es zeigen:
- Fig. 1: eine erste Ausführungsform einer erfindungsgemäßen Mediumleitung in einer Längsschnittdarstellung,
- Fig. 2: eine zweite Ausführungsform einer erfindungsgemäßen Mediumleitung in einer Seitenansicht,
- Fig. 3: eine dritte Ausführungsform einer erfindungsgemäßen Mediumleitung in einer Seitenansicht.

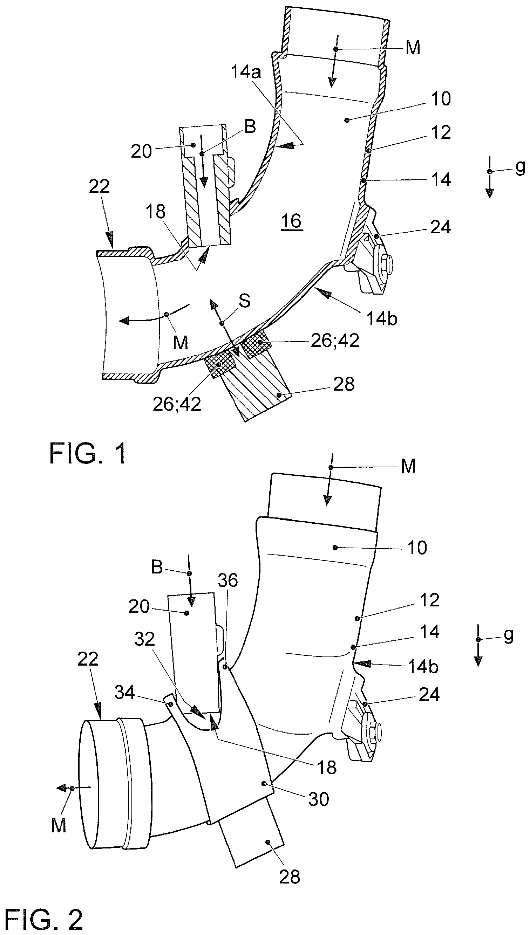

In den Fig. 1 bis 3 sind beispielhafte Ausführungsformen verschiedener erfindungsgemäßer Mediumleitungen 10 gezeigt.

Die in Fig 1. gezeigte Mediumleitung 10 ist in einem Längsschnitt dargestellt. Die Mediumleitung 10 umfasst einen Grundkörper 12 mit einer Umfangswand 14, die eine innere Umfangswand 14a und eine äußere Umfangswand 14b umfasst. Von der inneren Umfangswand 14a des Grundkörpers 12 wird ein Strömungsbereich 16 für ein nicht dargestelltes Medium begrenzt. Das Medium wird in Richtung der Hauptströmungsrichtung M durch den Strömungsbereich 16 des Grundkörpers 12 geführt.

Die in Fig. 1 gezeigte Mediumleitung 10 ist Teil eines Ansaugtraktes einer nicht dargestellten Brennkraftmaschine. Bei der dargestellten Mediumleitung 10 handelt es sich um eine sogenannte Ansaughutze, die auch eine Blow-by-Gas-Einleitstelle 18 einer Blow-by-Gas-Leitung 20 umfasst. Das in Richtung der Hauptströmungsrichtung M strömende Medium ist dementsprechend Ansaugluft der nicht dargestellten Brennkraftmaschine. Durch die Blow-by-Gas-Leitung 20 werden Abgase aus dem nicht dargestellten Kurbelgehäuse der Brennkraftmaschine in Richtung des Pfeiles B in den Ansaugtrakt eingeleitet und der Ansaugluft beigemengt. Stromabwärts der Blow-by-Gas-Einleitstelle 18 strömt die Ansaugluft weiter in Richtung eines nicht dargestellten Verdichterrades eines ebenfalls nicht dargestellten Turboladers.

An dem Grundkörper 12 der Mediumleitung 10 ist in der gezeigten Ausführungsform ein optionales Anschlusselement, hier in Form einer Dichtmuffe 22, ausgebildet. Über dieses Anschlusselement kann die Mediumleitung 10 mit einem weiteren, nicht dargestellten Element verbunden werden, insbesondere mit einem weiteren Leitungselement.

An dem Grundkörper 12 ist ferner eine optionale Anbindungsstruktur 24 ausgebildet, welche zur Fixierung der Mediumleitung 10 an einem anderen Element der Brennkraftmaschine bzw. an einem Karosserieelement eines Kraftfahrzeuges dient.

In der in Fig. 1 gezeigten ersten Ausführungsform sind an dem Grundkörper 12 gegenüber der Blow-by-Gas-Einleitstelle 18 der Blow-by-Gas-Leitung 20 außerhalb des Strömungsbereiches 16 Befestigungsstrukturen 26 in Form von zwei zueinander beabstandeten Materialverstärkungen 42 angeordnet. Die Befestigungsstruktur 26 ist fest mit einer äußeren Umfangsfläche 14b des Grundkörpers 12 verbunden. Ein Mittel zur Schwingungsanregung 28 ist an dem Grundkörper 12 befestigt ist. Bei der Befestigungsstruktur 26 handelt es sich vorliegend um eine Materialanhäufung, mit welchem das Mittel zur Schwingungsanregung 28 fest verbunden ist, beispielsweise verschweißt, verklebt oder verpresst. Das Mittel zur Schwingungsanregung 28 erzeugt von außen auf die äußere Umfangswand 14b gerichtete, radial nach innen wirkende Schwingungen. Die von dem Mittel zur Schwingungsanregung 28 erzeugte Hauptschwingungsrichtung des Grundkörpers 12 ist durch den Doppelpfeil S angedeutet. Als Mittel zur Schwingungsanregung 28 kommen insbesondere piezoelektrische Elemente oder elektromechanische Elemente in Betracht. Die Mittel zur Schwingungsanregung 28 sind weiter bevorzugt funktional mit einer externen Energieversorgung (nicht dargestellt) und/oder mit einer Steuerung (nicht dargestellt) zur bedarfsweisen Aktivierung verbunden, insbesondere um die Mittel zur Schwingungsanregung 28 bei Erreichen und Unterschreiten einer vorgegebenen Soll-Temperatur zu aktivieren.

Vorliegend ist nur ein Mittel zur Schwingungsanregung 28 außen an dem Grundkörper 12 angeordnet. Das Mittel zur Schwingungsanregung 28, erstreckt sich in den Bereich zwischen die Materialverstärkungen 42 bis zum äußeren Umfangswand 42. Ferner erstreckt es sich über einen Bereich von ungefähr 20 % des Außenumfangs des Grundkörpers 12.

Optional können entlang des Außenumfangs und/oder in Hauptströmungsrichtung beabstandet zu dem gezeigten Mittel zur Schwingungsanregung 28 auch weitere solche Mittel zur Schwingungsanregung (nicht dargestellt) angeordnet sein.

Wie bereits erwähnt, besteht eine erhöhte Gefahr einer Bildung von größeren Eiselementen - in Hauptströmungsrichtung M betrachtet - im Bereich der Blow-by-Gas-Einleitstelle 18 der Blow-by-Gas-Leitung 20, da wenn Wassertröpfchen, die in dem Blow-by-Gas enthalten sind, an den Umfangswänden der Blow-by-Gas-Leitung kondensieren, aus der Blow-by-Gas-Leitung 20 schwerkraftbedingt in die Mediumleitung 10 gelangen, insbesondere dort hineintropfen, oder anschließend in der Mediumleitung 10 gefrieren.

Wenn die Blow-by-Gas-Leitung 20 in Einbaulage, wie in Fig. 1 dargestellt, auf der Oberseite der Mediumleitung 10 angeordnet ist, so tropfen insbesondere größere Wassertröpfchen aus der Blow-by-Gas-Leitung 20 überwiegend auf die innere Umfangswand 14a auf der der Blow-by-Gas-Einleitstelle 18 gegenüberliegenden Unterseite der Mediumleitung 10. Durch die Anordnung des Mittels zur Schwingungsanregung 28 im Bereich der korrespondierenden äußeren Umfangswand 14b der Mediumleitung 10 wird der Entstehung größerer Eiselemente besonders effizient am Ort der Entstehung entgegengewirkt.

Im Folgenden werden zur Beschreibung weiterer Ausführungsformen für identische oder zumindest funktionsgleiche Elemente die gleichen Bezugszeichen verwendet, wie zur Beschreibung der ersten Ausführungsform in Verbindung mit Fig. 1.

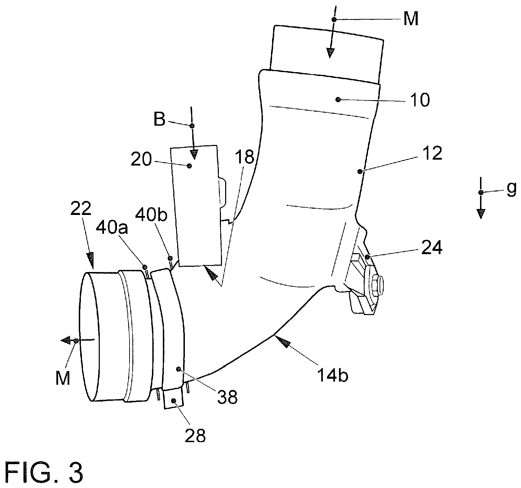

Bei den in den Fig. 2 und Fig. 3 gezeigten Ausführungsformen handelt es sich um identische oder zumindest funktionsgleich ausgebildete Mediumleitungen 10, die sich von der ersten Ausführungsform im Wesentlichen durch die Anordnung und Anbindung des Mittels zur Schwingungsanregung 28 unterscheiden.

In Fig. 2 ist eine zweite Ausführungsform einer Mediumleitung 10 in einer Seitenansicht dargestellt. Zu sehen ist daher nur die Mediumleitung 10 mit ihrer äußeren Umfangswand 14b. Wie bei der ersten Ausführungsform, ist hier ebenfalls gegenüberliegend der Blow-by-Gas-Einleitstelle 18 der Blow-by-Gas-Leitung 20 ein Mittel zur Schwingungsanregung 28 angeordnet. Das Mittel zur Schwingungsanregung 28 ist hier über ein den Grundkörper 12 vollständig umschließendes schematisch dargestelltes Band 30 an der äußeren Umfangswand 14b des Grundkörpers 12 befestigt. Das Mittel zur Schwingungsanregung 28 ist fest mit dem Band 30 verbunden. Das Band 30 weist einen geschlitzten Bereich 32 auf, wobei ein linker Abschnitt 34 des Bandes 30 die Blow-by-Gas-Leitung 20 stromabwärts umgreift und ein rechter Abschnitt 36 des Bandes 30 die Blow-By-Gas-Leitung 20 stromaufwärts umgreift. Dadurch wird sichergestellt, dass das Band 30 trotz der von dem Mittel zur Schwingungsanregung 28 erzeugten Schwingungen in seiner Position gehalten wird und sich insbesondere nicht in Hauptströmungsrichtung M relativ zu dem Grundkörper 12 bewegt.

Auch in der in Fig. 3 gezeigten dritten Ausführungsform ist ein Mittel zur Schwingungsanregung 28 außenseitig an der äußeren Umfangswand 14b des Grundkörpers 12 der Mediumleitung 10 befestigt. In dieser Ausführungsform ist das Mittel zur Schwingungsanregung 28 stromabwärts der Blow-by-Gas-Einleitstelle 18 der Blow-by-Gas-Leitung 20, aber sich unmittelbar an die Blow-by-Gas-Einleitstelle 18 anschließend angeordnet. Das Mittel zur Schwingungsanregung 28 ist über eine den Grundkörper 12 vollständig umgebende, nur schematisch dargestellte Schelle 38 an dem Grundkörper 12 befestigt. Die Schelle 38 ist über sich zumindest teilweise über den Außenumfang des Grundkörpers 12 erstreckende, radial hervorragende Begrenzungselemente 40a, 40b gegenüber dem Grundkörper 12 insoweit festgelegt, als Relativbewegungen der Schelle 30 und der Mediumleitung 10 in Strömungsrichtung M entgegengewirkt wird bzw. solche Relativbewegungen nur innerhalb der Begrenzungselemente zugelassen werden.

Um Relativbewegungen zwischen einem Band 30 (Fig. 2) bzw. einer Schelle 38 (Fig. 3) und dem Grundkörper 12 entgegenzuwirken, können an dem Band 30 bzw. der Schelle 38 auf der zur äußeren Umfangswand 14b gerichteten Seite Aufrauhungen und/oder Zähne ausgebildet sein, die zusammen mit Aufrauhungen und/oder komplementär ausgebildeten Zähnen im Bereich der äußeren Umfangswand 14b des Grundkörpers eine relative Axialfixierung bzw. eine Verzahnung des Bandes 30 bzw. der Schelle 38 mit der äußeren Umfangsfläche 14b des Grundkörpers 12 bewirken.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche variiert werden.

Diesbezüglich wird insbesondere darauf verwiesen, dass die in den Figuren gezeigten Ausführungsformen der Mediumleitungen 10 aus Kunststoff im Blasformverfahren hergestellt sind. Erfindungsgemäße Mediumleitungen können aber auch aus metallischen Werkstoffen oder aus anderen geeigneten Werkstoffen und auch in anderen Herstellungsverfahren hergestellt sein, beispielsweise als Kunststoffspritzgießteile oder als metallische Gussteile.

### Bezugszeichenliste

- 10: Mediumleitung
- 12: Grundkörper
- 14: Umfangswand
- 14a: innere Umfangswand
- 14b: äußere Umfangswand
- 16: Strömungsbereich
- 18: Blow-by-Gas-Einleitstelle
- 20: Blow-by-Gas-Leitung
- 22: Dichtmuffe
- 24: Anbindungsstruktur
- 26: Befestigungsstruktur
- 28: Mittel zur Schwingungsanregung
- 30: Band
- 32: geschlitzter Bereich
- 34: linker Abschnitt
- 36: rechter Abschnitt
- 38: Schelle
- 40a: Begrenzungselement
- 40b: Begrenzungselement
- 42: Materialverstärkung

## Patentansprüche

1. Mediumleitung einer Brennkraftmaschine mit einem Grundkörper (12) und mindestens einem, von einer Umfangswand (14) des Grundkörpers (12) begrenzten Strömungsbereich (16) und mit einer Blow-by-Gas-Einleitstelle (18), wobei der Strömungsbereich (16) zur Durchströmung von einem Medium vorgesehen ist, wobei an dem Grundkörper (12) außerhalb des Strömungsbereiches (16) im Bereich der Blow-by-Gas-Einleitstelle (18) mindestens ein Mittel zur Schwingungsanregung (28) des Grundkörpers (12) angeordnet ist, das ein mechanisches Lösen von kleineren Eiselementen ermöglicht,
**dadurch gekennzeichnet,**
**dass** das mindestens eine Mittel zur Schwingungsanregung (28) in Strömungsrichtung betrachtet im Bereich der Blow-by-Gas-Einleitstelle (18) außenseitig einer Ansaughutze und auf einer der Blow-by-Gas-Einleitstelle (18) gegenüberliegenden Seite an der Außenseite des Grundkörpers (12) der Mediumleitung (12) angeordnet ist.

2. Mediumleitung nach dem vorstehenden Anspruch, **dadurch gekennzeichnet, dass** der Grundkörper (12) Teil einer Ansaugleitung einer Brennkraftmaschine ist.

3. Mediumleitung nach einem der vorstehenden Ansprüche, **dadurch gekennzeichnet, dass** das mindestens eine Mittel zur Schwingungsanregung (28) derart angeordnet und ausgebildet ist, dass von außen auf die Umfangswand (14) gerichtete, zumindest teilweise radial nach innen wirkende Schwingungen in den Grundkörper (12) einleitbar sind.

4. Mediumleitung nach einem der vorstehenden Ansprüche, **dadurch gekennzeichnet, dass** das mindestens eine Mittel zur Schwingungsanregung (28) funktional mit einer externen Energieversorgung verbunden ist.

5. Mediumleitung nach einem der vorstehenden Ansprüche, **dadurch gekennzeichnet, dass** mit dem Mittel zur Schwingungsanregung (28) Schwingungen mit einer Frequenz von mindestens 50 Hz erzeugbar sind.

6. Mediumleitung nach einem der vorstehenden Ansprüche, **dadurch gekennzeichnet, dass** das Mittel zur Schwingungsanregung (28) zur Erzeugung von Schwingungen ausgelegt ist, deren Frequenz um maximal 10% von der Eigenfrequenz oder mindestens eines ganzzahligen Vielfachen der Eigenfrequenz des Grundkörpers (12) abweicht.

7. Mediumleitung nach einem der vorstehenden Ansprüche, **dadurch gekennzeichnet, dass** sich das mindestens eine Mittel zur Schwingungsanregung (28) über mindestens 5% des Außenumfangs des Grundkörpers (12) erstreckt.

8. Mediumleitung nach einem der vorstehenden Ansprüche, **dadurch gekennzeichnet, dass**
a) an dem Grundkörper (12) eine Befestigungsstruktur (26) vorgesehen ist, um das Mittel zur Schwingungsanregung (28) an dem Grundkörper (12) zu fixieren und/oder
b) dass das Mittel zur Schwingungsanregung (28) über eine den Grundkörper (12) zumindest teilweise umschließende Schelle (38) und/oder ein den Grundkörper (12) zumindest teilweise umschließendes Band (30) an dem Grundkörper (12) befestigt ist.

9. Mediumleitung nach einem der vorstehenden Ansprüche, **dadurch gekennzeichnet, dass** das mindestens eine Mittel zur Schwingungsanregung (28) funktional mit einer Steuerung zur bedarfsweisen Aktvierung des mindestens einen Mittels zur Schwingungsanregung (28) gekoppelt ist.

## Claims

1. Medium line of an internal combustion engine, comprising a main body (12) and at least one flow region (16) delimited by a peripheral wall (14) of the main body (12) and comprising a blow-by gas inlet point (18), the flow region (16) being provided for a medium to flow therethrough, at least one means for vibrational excitation (28) of the main body (12) being arranged on the main body (12) outside the flow region (16) in the region of the blow-by gas inlet point (18), which means enables a mechanical release of smaller ice elements,
**characterized in that**
the at least one means for vibrational excitation (28) is arranged, viewed in the flow direction, in the region of the blow-by gas inlet point (18) on the outside of an intake scoop and on a side opposite the blow-by gas inlet point (18) on the outside of the main body (12) of the medium line (12).

2. Medium line according to the preceding claim, **characterized in that** the main body (12) is part of an intake line of an internal combustion engine.

3. Medium line according to any of the preceding claims,
**characterized in that** the at least one means for vibrational excitation (28) is arranged and designed such that at least partially radially inwardly acting vibrations directed from the outside onto the peripheral wall (14) can be introduced into the main body (12).

4. Medium line according to any of the preceding claims,
**characterized in that** the at least one means for vibrational excitation (28) is functionally connected to an external power supply.

5. Medium line according to any of the preceding claims,
**characterized in that** vibrations at a frequency of at least 50 Hz can be generated by the means for vibrational excitation (28).

6. Medium line according to any of the preceding claims,
**characterized in that** the means for vibrational excitation (28) is designed to generate vibrations of which the frequency deviates by a maximum of 10% from the natural frequency or at least an integer multiple of the natural frequency of the main body (12).

7. Medium line according to any of the preceding claims,
**characterized in that** the at least one means for vibrational excitation (28) extends over at least 5% of the outer periphery of the main body (12).

8. Medium line according to any of the preceding claims,
**characterized in that**
a) a fastening structure (26) is provided on the main body (12) in order to fix the means for vibrational excitation (28) to the main body (12)
**and/or**
b) **in that** the means for vibrational excitation (28) is fastened to the main body (12) via a clamp (38) at least partially enclosing the main body (12) and/or a belt (30) at least partially enclosing the main body (12).

9. Medium line according to any of the preceding claims,
**characterized in that** the at least one means for vibrational excitation (28) is functionally coupled to a controller for activating the at least one means for vibration excitation (28) as required.

## Revendications

1. Conduite de fluide d'un moteur à combustion interne comportant un corps de base (12) et au moins une zone d'écoulement (16) délimitée par une paroi périphérique (14) du corps de base (12) et comportant un poste d'injection de gaz par soufflage (18), dans laquelle la zone d'écoulement (16) est prévue pour être parcourue par un fluide, dans lequel sur le corps de base (12) en dehors de la zone d'écoulement (16), dans la zone du poste d'injection de gaz par soufflage (18) au moins un moyen destiné à la génération de vibrations (28) du corps de base (12) est disposé, qui permet un détachement mécanique de petits éléments de glace,
**caractérisée en ce que**
l'au moins un moyen destiné à la génération de vibrations (28) est disposé, vu dans la direction d'écoulement, dans la zone du poste d'injection de gaz par soufflage (18) coté externe d'un capot d'aspiration et sur un côté opposé au poste d'injection de gaz par soufflage (18) sur le côté externe du corps de base (12) de la conduite de fluide (12).

2. Conduite de fluide selon la revendication précédente,
**caractérisée en ce que** le corps de base (12) forme une partie d'une conduite d'admission d'un moteur à combustion interne.

3. Conduite de fluide selon l'une des revendications précédentes,
**caractérisée en ce que** l'au moins un moyen destiné à la génération de vibrations (28) est disposé et conçu de sorte que des vibrations dirigées de l'extérieur sur la paroi périphérique (14), agissant au moins partiellement radialement vers l'intérieur, peuvent être introduites dans le corps de base (12).

4. Conduite de fluide selon l'une des revendications précédentes,
**caractérisée en ce que** l'au moins un moyen destiné à la génération de vibrations (28) est relié de manière fonctionnelle à une alimentation en énergie externe.

5. Conduite de fluide selon l'une des revendications précédentes,
**caractérisée en ce que** des vibrations avec une fréquence d'au moins 50 Hz peuvent être générées avec le moyen destiné à la génération de vibrations (28).

6. Conduite de fluide selon l'une des revendications précédentes,
**caractérisée en ce que** le moyen destiné à la génération de vibrations (28) est configuré pour la génération de vibrations dont la fréquence dévie d'au plus 10 % de la fréquence propre ou d'au moins un multiple entier de la fréquence propre du corps de base (12).

7. Conduite de fluide selon l'une des revendications précédentes,
**caractérisée en ce que** l'au moins un moyen destiné à la génération de vibrations (28) s'étend sur au moins 5 % de la périphérie externe du corps de base (12).

8. Conduite de fluide selon l'une des revendications précédentes,
**caractérisée en ce que**
a) une structure de fixation (26) est prévue sur le corps de base (12), afin de fixer le moyen destiné à la génération de vibrations (28) sur le corps de base (12)
**et/ou**
b) **que** le moyen destiné à la génération de vibrations (28) est fixé au corps de base (12) par l'intermédiaire d'un collier (38) entourant au moins partiellement le corps de base (12) et/ou d'une bande (30) entourant au moins partiellement le corps de base (12).

9. Conduite de fluide selon l'une des revendications précédentes,
**caractérisée en ce que** l'au moins un moyen destiné à la génération de vibrations (28) est accouplé de manière fonctionnelle à une commande pour l'activation selon les besoins de l'au moins un moyen destiné à la génération de vibrations (28).
